# EUROPÄISCHE PATENTANMELDUNG

(11) **EP 1 742 496 A1**
(43) Veröffentlichungstag der Anmeldung: **10.01.2007**
(21) Anmeldenummer: 05014466.6
(22) Anmeldetag: 04.07.2005
(51) Int. Cl.: H04Q 7/36

(54) **Verfahren für die Zuweisung von Funkresourcen und zugehörige Funkstationen**

(71) Anmelder: SIEMENS AKTIENGESELLSCHAFT, 80333 München (DE)
(72) Erfinder: Kloeck, Clemens, 76149 Karlsruhe (DE); Luo, Jijun, 90797 München (DE)

(57) **Zusammenfassung**

Bei einem Verfahren zum Betrieb eines zweiten Funkkommunikationssystems empfängt eine netzseitig angeordnete zweite Funkstation des zweiten Funkkommunikationssystems eine Ressourceninformation über eine Luftschnittstelle von einer netzseitig angeordneten ersten Funkstation eines ersten Funkkommunikationssystems, wobei der Ressourceninformation entnehmbar ist, dass wenigstens eine von dem ersten Funkkommunikationssystem verwaltete Funkressource zum zumindest zeitweisen Verwenden durch andere Funkstationen angefordert werden kann. Erfindungsgemäß sendet die zweite Funkstation eine Ressourcenanforderung an die erste Funkstation, und die zweite Funkstation sendet weiterhin eine Information an die erste Funkstation, damit anhand der Information vom ersten Funkkommunikationssystem entschieden werden kann, ob der zweiten Funstation Funkressourcen zugewiesen werden.

## Beschreibung

Die Erfindung betrifft ein Verfahren zum Betrieb eines ersten Funkkommunikationssystems und ein Verfahren zum Betrieb eines zweiten Funkkommunikationssystems sowie eine entsprechende netzseitig angeordnete erste Funkstation und eine entsprechende netzseitig angeordnete zweite Funkstation.

Für den Betrieb von Funkkommunikationssystemen sind eine Vielzahl von Funkzugangstechnologien (RAT: Radio Access Technologies) bekannt. Zellulare Funkkommunikationssysteme, die beispielsweise Zeitschlitze und/oder unterschiedliche Frequenzen und/oder unterschiedliche Codes als Funkressourcen für Funkübertragungen verwenden, werden beispielsweise gemäß dem GSM-(Global System for Mobile Communications) Standard oder dem UMTS-(Universal Mobile Telecommunications System) Standard betrieben. Weitere Funkzugangstechnologien, die die zuvor genannten Funkressourcen nutzen, sind zum Beispiel in den Standards HiperLAN (High Performance Radio Local Area Network), IEEE (Institute of Electrical and Electronics Engineers) 802.11a bis i und Bluetooth beschrieben.

Funkkommunikationssysteme benutzen fest vorgegebene Frequenzbänder zur Übertragung ihrer Nutz- und Signalisierungsdaten. So werden beispielsweise zellulare Funkkommunikationssysteme gemäß dem GSM-Standard in einem anderen Frequenzband betrieben als Funkkommunikationssysteme gemäß einem UMTS-Standard. Weiterhin verwenden innerhalb eines Übertragungsstandards unterschiedliche Betreiber von Funkkommunikationssystemen unterschiedliche Frequenzbänder.

Eine starre Zuordnung von Frequenzbändern zu Funkkommunikationssystemen und somit auch zu Betreibern von Funkkommunikationssystemen sowie zu bestimmten Funkzugangstechnologien hat den Nachteil, dass Teilnehmerstationen eines Funkkommunikationssystems keine Verbindung aufbauen können oder nur mit einer geringeren Datenrate als gewünscht übertragen können, falls die Kapazitätsgrenze in dem Frequenzband ihres Funkkommunikationssystems beinahe erreicht wird. Gleichzeitig kann es vorkommen, dass in einem anderen Funkkommunikationssystem vorhandene Funkressourcen nicht genutzt werden.

Eine immer weiter steigende Zahl von Teilnehmerstationen, die Daten über Funkverbindungen übertragen und eine damit verbundene, immer größer werdende Datenkapazität, die von Funkkommunikationssystemen benötigt wird, weckt bei den Betreibern von Funkkommunikationssystemen den Wunsch, auf einen möglichst breiten Frequenzbereich, d.h. auf eine möglichst große Anzahl von Funkressourcen, zugreifen zu können.

Der Erfindung liegt die Aufgabe zugrunde, vorteilhafte Verfahren zum Betrieb von Funkkommunikationssystemen sowie entsprechende netzseitig angeordnete Funkstationen anzugeben, mittels derer Funkstationen eine flexible Nutzung von Funkressourcen ermöglicht wird.

Diese Aufgabe wird mit dem Verfahren und den netzseitig angeordneten Funkstationen gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Betrieb eines ersten Funkkommunikationssystems sendet eine netzseitig angeordnete erste Funkstation des ersten Funkkommunikationssystems eine Ressourceninformation über eine Luftschnittstelle, wobei der Ressourceninformation entnehmbar ist, dass wenigstens eine von dem ersten Funkkommunikationssystem verwaltete Funkressource zum zumindest zeitweise Verwenden durch andere Funkstationen angefordert werden kann. Gemäß der Erfindung empfängt die erste Funkstation von wenigstens einer netzseitig angeordneten zweiten Funkstation eine Ressourcenanforderung, und die erste Funkstation empfängt weiterhin von der zweiten Funkstation eine Information, anhand derer netzseitig entschieden wird, ob der zweiten Funkstation Funkressourcen zugewiesen werden.

Durch die Erfindung wird ermöglicht, dass das erste Funkkommunikationssystem Funkressourcen, die von der ersten Funkstation oder einer anderen netzseitig angeordneten Funkstation des ersten Funkkommunikationssystems zumindest zeitweise nicht genutzt werden, anderen Funkstationen anbietet und zumindest zeitweise zuweist. Ein Nutzungsrecht für Funkressourcen kann somit flexibel von einer netseitig angeordneten Funkstation auf eine andere netzseitig angeordnete Funkstation übertragen werden.

Es kann beispielsweise vorkommen, dass die netzseitig angeordnete zweite Funkstation ihr zur Verfügung stehende Funkressourcen vollständig ausschöpft aber Bedarf an weiteren Funkressourcen hat, um beispielsweise wenigstens einer Teilnehmerstation zusätzliche Funkverbindungen oder um wenigstens einer zusätzlichen Teilnehmerstation wenigstens eine erste Funkverbindungen mit der zweiten Funkstation zu ermöglichen. Erhält die zweite Funkstation aufgrund ihrer Ressourcenanforderung, Funkressourcen vom ersten Funkkommunikationssystem zugewiesen, kann sie die zugewiesenen Funkressourcen für zusätzliche Funkverbindungen verwenden.

Bei der Information, anhand derer netzseitig entschieden wird, ob der zweiten Funkstation Funkressourcen zugewiesen werden, handelt es sich beispielsweise um eine Kennung der zweiten Funkstation und/oder ein Maß für einen Auslastungsgrad der bereits von der zweiten Funkstation verwendeten Funkressourcen und/oder um eine Information hinsichtlich der Art der nachfolgend zur Übertragung über die angeforderten Funkressourcen vorgesehenen Daten und/oder um eine Information hinsichtlich einer benötigten Übertragungsqualität und/oder um ein Angebot eines für die angeforderten Funkressourcen gebotenen Kaufpreises. Bei der Art der Daten wird beispielsweise zwischen Sprachdaten, Bilddaten und/oder textrepräsentierenden Daten und/oder zwischen Echtzeit (real-time) und Nicht-Echtzeit (non real-time) Daten unterschieden.

Die Information anhand derer netzseitig entschieden wird, ob der zweiten Funkstation Funkressourcen zugewiesen werden, kann sowohl in die Ressourcenanforderung integriert sein, als auch separat von der Ressourcenanforderung als eigenständige Nachricht gesendet werden.

Es ist weiterhin von Vorteil, wenn der Ressourceninformation entnehmbar ist, wie viele und/oder welche Funkressourcen angefordert werden können.

Die Ressourcenanforderung berücksichtigt beispielsweise den Inhalt der empfangenen Ressourceninformation dahingehend, dass der Ressourceninformation entnommen wird, wie viele und/oder welche Funkressourcen zum Verwenden zur Verfügung stehen und dass von den angebotenen Funkressourcen eine bestimmte Anzahl und/oder bestimmte Funkressourcen angefordert werden. Es kann somit vermieden werden, dass von der zweiten Funkstation mehr Funkressourcen als angeboten angefordert werden.

Weiterhin kann in der Ressourcenanforderung eine Information enthalten sein, der entnehmbar ist, für welchen Zeitraum die angeforderten Funkressourcen benötigt werden.

Vorteilhafter Weise werden als Funkressourcen Zeitschlitze und/oder Frequenzen und/oder Codes verwendet.

Vorteilhafter Weise werden die Ressourceninformation und/oder die Ressourcenanforderung und/oder eine Nachricht über eine Ressourcenvergabe in der Medium Access Control Schicht MAC von Funkübertragungsrahmen gesendet.

Die Medium Access Control Schicht ist eine Teilschicht der aus dem OSI (Open Systems Interconnection) Referenzmodell der ISO (International Standardization Organization) bekannten Sicherungsschicht (data link layer) und ist in diesem Schichtmodell über der physikalischen Schicht angeordnet. Ein Aushandeln von Funkressourcen zwischen der ersten Funkstation und der zweiten und/oder dritten Funkstation kann daher durch eine in der MAC Schicht, d.h. in einem als MAC-Rahmen bezeichneten Funkübertragungsrahmen, durchgeführte Übertragung der Ressourceninformation und/oder der Ressourcenanforderung und/oder der Nachricht über eine Ressourcenvergabe schneller erfolgen, als wenn die Ressourceninformation und/oder die Ressourcenanforderung und/oder die Nachricht über eine Ressourcenvergabe auf höheren Schichten (z.B. auf der Vermittlungs- oder auf der Transport- oder sogar auf der Anwendungsschicht) übertragen werden.

Selbstverständlich kann die Erfindung auch mit einer Übertragung der Ressourceninformation und/oder der Ressourcenanforderung und/oder der Nachricht über eine Ressourcenvergabe beispielsweise auf einem separaten logischen Übertragungskanal in einer über der Sicherungsschicht angeordneten Schicht durchgeführt werden.

Eine Ausgestaltung der Erfindung sieht vor, dass die erste Funkstation von wenigstens einer dritten Funkstation eine Ressourcenanforderung empfängt und dass die erste Funkstation auch von der dritten Funkstation eine Information empfängt, anhand derer netzseitig entschieden wird, ob der dritten Funkstation alternativ oder zusätzlich zur zweiten Funkstation Funkressourcen zugewiesen werden.

Auf diese Weise wird ermöglicht, dass mehrere Funkstationen von der ersten Funkstation angebotene Funkressourcen anfordern und dass anhand der Information, die jeweils von den anfordernden Funkstationen empfangen wird, entschieden wird, ob eine oder mehrere der anfordernden Funkstationen Funkressourcen erhalten. Im Fall einer Zuweisung von Funkressourcen kann gleichzeitig anhand der jeweils von den Funkstationen empfangenen Information entschieden werden, welche Funkressourcen der jeweiligen Funkstation zugewiesen werden. Anhand der jeweils empfangenen Information kann somit eine Priorisierung von Funkstationen erfolgen. Beispielsweise können Kennungen von Funkstationen im ersten Funkkommunikationssystem bekannt sein und den Kennungen kann jeweils eine Priorität zugeordnet sein. Das Zuordnen einer Priorität kann beispielsweise durch eine Klassifizierung von Funkstationen in Prioritätsklassen erfolgen, wobei jeder Prioritätsklasse beispielsweise bestimmte Kennungen oder bestimmte Kennungsarten zugeordnet sind. Als Kennungsart kann beispielsweise zwischen einer Kennung einer netzseitigen Funkstation und einer mobilen Funkstation (z.B. ein Mobiltelefon) und/oder einer Kennung von Funkkommunikationssystemen unterschieden werden.

Beispielsweise ermöglicht die Erfindung, dass die anfordernden Funkstationen als Information eine jeweilige Kennung übertragen, und dass eine Zuweisung von Funkressourcen solange in der Reihenfolge der jeweiligen der Kennung entsprechenden Priorität erfolgt, bis alle Funkressourcen zugewiesen wurden. Es kann in diesem Fall vorkommen, dass eine Funkstation mit einer niedrigen Priorität nur dann Funkressourcen erhält, wenn nach Berücksichtigung aller ebenfalls anfordernden Funkstation mit höherer Priorität nicht alle zuweisbaren Funkressourcen vergeben sind.

Eine Priorisierung der anfordernden Funkstationen kann selbstverständlich alternativ oder zusätzlich auch anhand der anderen zuvor genannten, die jeweilige Information umfassenden Angaben vorgenommen werden. Insbesondere ist es günstig, wenn netzseitig ein in der jeweiligen Information enthaltener Kaufpreis bei der Vergabe der Funkressourcen berücksichtigt wird.

Beispielsweise kann die erste Funkstation in der Ressourceninformation einen Mindestpreis für die angebotenen Funkressourcen angeben und unter Berücksichtigung der von anfordernden Funkstationen empfangenen jeweiligen Informationen, die beispielsweise neben anderen oben genannten Angaben auch einen Kaufpreis enthalten, die angebotenen Funkressourcen in Form einer Auktion an die anfordernden Funkstationen versteigern. Eine Zuordnung zu Prioritätsklassen und/oder eine Reihenfolge, d.h. eine Priorisierung, innerhalb einer kennungsspezifischen Prioritätsklasse erfolgt in diesem Fall durch Auswertung des jeweils gebotenen Kaufpreises. Beispielsweise kann jede Prioritätsklasse einem Kaufpreis entsprechen und kann somit selbstverständlich auch mehrere Funkstationen mit gleichem Kaupreis enthalten. In diesem Fall wird innerhalb einer Prioritätsklasse beispielsweise anhand einer Priorisierung der Kennungen über eine Zuweisung von Funkressourcen entschieden.

Vorteilhafter Weise ist die dritte Funkstation eine Teilnehmerstation eines Funkkommunikationssystems.

Die Teilnehmerstation kann beispielsweise dem ersten Funkkommunikationssystem oder einem anderen Funkkommunikationssystem zugeordnet sein. Somit kann netzseitig beispielsweise entschieden werden, ob bei einer expliziten Anforderung gleicher Funkressourcen und/oder bei einer begrenzten Anzahl zuweisbarer Funkressourcen einer Teilnehmerstation und/oder einer netzseitig angeordneten Funkstation angeforderte Funkressourcen in vollem oder in begrenztem Umfang zugewiesen werden.

In einer Weiterbildung der Erfindung sind die zweite Funkstation und/oder die dritte Funkstation in einem zweiten Funkkommunikationssystem angeordnet, wobei das zweite Funkkommunikationssystem und das erste Funkkommunikationssystem durch unterschiedliche Betreiber und/oder mit unterschiedlichen Funkzugangstechnologien betrieben werden.

Auf diese Weise können durch die Erfindung Funkressourcen, die von einem Funkkommunikationssystem verwaltet und bisher ausschließlich von diesem Funkkommunikationssystem genutzt werden, anderen Funkkommunikationssystemen zumindest zeitweise zur Nutzung überlassen werden. Ist das erste Funkkommunikationssystem beispielsweise zeitweise nicht ausgelastet, wird ermöglicht, dass nicht genutzte Funkressourcen von der zweiten und/oder der dritten Funkstation in einem anderen Funkkommunikationssystem genutzt werden. Dies ermöglicht die Nutzung von Funkressourcen des ersten Funkkommunikationssystems durch Teilnehmerstationen des zweiten Funkkommunikationssystems. Teilnehmerstationen des zweiten Funkkommunikationssystems müssen sich dazu jedoch nicht beim ersten Funkkommunikationssystem einbuchen, sondern nutzen die Funkressourcen des ersten Funkkommunikationssystems über Verbindungen mit einer Einrichtung - beispielsweise mit der zweiten und/oder dritten Funkstation - des zweiten Funkkommunikationssystems.

Es ist von Vorteil, wenn anhand der von der zweiten Funkstation und/oder der dritten Funkstation jeweils empfangenen Information zusätzlich festgelegt wird, welche und wie viele Funkressourcen der zweiten Funkstation und/oder der dritten Funkstation zugewiesen werden.

Eine Weiterbildung der Erfindung sieht vor, dass der zweiten und/oder der dritten Funkstation Kontrollfunktionen zur Steuerung von Funkverbindungen über zumindest einige der zugewiesenen Funkressourcen mit Teilnehmerstationen des ersten Funkkommunikationssystems zugewiesen werden.

Durch diese Weiterbildung wird ermöglicht, dass Teilnehmerstationen des ersten Funkkommunikationssystems Datenübertragungen, deren Daten zur Weiterleitung mittels des ersten Funkkommunikationssystems vorgesehen sind, über die zweite und/oder die dritte Funkstation im zweiten Funkkommunikationssystem durchführen. Die zweite und/oder die dritte Funkstation steuern dann die Datenübertragung von Teilnehmerstationen des ersten Funkkommunikationssystems über Funkressourcen des ersten Funkkommunikationssystems. Dabei werden an Teilnehmerstationen gesendeten Daten zuvor vom ersten Funkkommunikationssystem empfangen und an das zweite Funkkommunikationssystem weitergeleitet, und von den Teilnehmerstationen empfangene Daten werden an das erste Funkkommunikationssystem weitergeleitet. Die zweiten und/oder dritten Funkstationen und das zweite Funkkommunikationssystem dienen somit als Relaisstationen für Datenübertragungen von Teilnehmerstationen des ersten Funkkommunikationssystems im ersten Funkkommunikationssystem.

Vorteilhafter Weise werden die Ressourceninformationen nur an eine vorgebbare Gruppe von Funkstationen gesendet und Anforderungen von Funkressourcen werden nur von Funkstationen der Gruppe bearbeitet.

Auf diese Weise können gezielt bestimmte Funkstationen, beispielsweise bestimmte Arten von Funkstationen, mit Funkressourcen versorgt werden. Eine Gruppierung kann beispielsweise anhand der Zugehörigkeit zu einem bestimmten Funkkommunikationssystem und/oder anhand verwendeter und/oder verwendbarer Funkzugangstechnologien erfolgen. Eine erste Gruppe besteht beispielsweise aus allen Funkstationen, die zum ersten Funkkommunikationssystem gehören und netzseitig angeordnet sind. Eine zweite Gruppe sind beispielsweise die Teilnehmerstationen des ersten Funkkommunikationssystems, während eine dritte Gruppe beispielsweise netzseitig angeordnete Funkstationen sind, die nicht zum ersten Funkkommunikationssystem gehören. Eine vierte Gruppe sind beispielsweise netzseitig angeordnete Funkstationen, die zu einem bestimmten zweiten Funkkommunikationssystem gehören. Eine fünfte Gruppe von Funkstationen sind beispielsweise alle Teilnehmerstationen, die nicht zum ersten Funkkommunikationssystem gehören. Alternativ oder zusätzlich können derartige Gruppen auch als Prioritätsklassen für Entscheidungen zur Zuweisung der Funkressourcen verwendet werden.

Bei dem erfindungsgemäßen Verfahren zum Betrieb eines zweiten Funkkommunikationssystems empfängt eine netzseitig angeordnete zweite Funkstation des zweiten Funkkommunikationssystems eine Ressourceninformation über eine Luftschnittstelle von einer netzseitig angeordneten ersten Funkstation eines ersten Funkkommunikationssystems, wobei der Ressourceninformation entnehmbar ist, dass wenigstens eine von den ersten Funkkommunikationssystem verwaltete Funkressource zum zumindest zeitweisen Verwenden durch andere Funkstationen angefordert werden kann. Erfindungsgemäß sendet die zweite Funkstation eine Ressourcenanforderung an die erste Funkstation, und die zweite Funkstation sendet weiterhin eine Information an die erste Funkstation, damit anhand der Information vom ersten Funkkommunikationssystem entschieden werden kann, ob der zweiten Funkstation Funkressourcen zugewiesen werden.

Das Senden der Ressourcenanforderung und/oder der Information, anhand derer über eine Zuweisung der Funkressourcen entschieden wird, erfolgt bevorzugt über die Luftschnittstelle, kann aber selbstverständlich auch über Datenleitungen beispielsweise innerhalb eines gemeinsamen Funkzugangsnetzes der ersten und zweiten und/oder dritten Funkstation erfolgen. Gehören die erste, zweite und/oder dritte Funkstation unterschiedlichen Funkkommunikationssystemen an, können selbstverständlich auch leitungsgebundene Übertragungswege zwischen den entsprechenden Funkkommunikationssystemen genutzt werden.

Eine netzseitig angeordnete erste Funkstation eines ersten Funkkommunikationssystems und eine netzseitig angeordnete zweite Funkstation eines zweiten Funkkommunikationssystems weisen alle Merkmale auf, die zur Durchführung der entsprechenden erfindungsgemäßen Verfahren benötigt werden. Insbesondere können entsprechende Mittel zur Durchführung der einzelnen Verfahrensschritte oder Verfahrensvarianten vorgesehen sein.

Die Erfindung wird im Folgenden anhand von in den Figuren dargestellten Ausführungsbeispielen näher erläutert. Es zeigen:
- Fig. 1: eine schematische Darstellung eines zeitlichen Ablaufs zur Zuweisung von Funkressourcen an Funkstationen und
- Fig. 2: eine schematische Darstellung von Funkübertragungsrahmen in der Medium Access Control (MAC) Schicht.

Gleiche Bezugszeichen in den Figuren bezeichnen gleiche Gegenstände.

Eine Funkstation ist eine Vorrichtung mittels derer in einem Funkkommunikationssystem Nutz- und/oder Signalisierungsdaten über eine Luftschnittstelle gesendet werden. Eine Funkstation ist beispielsweise netzseitig angeordnet, d.h. sie ist Bestandteil eines Funkzugangsnetzes des Funkkommunikationssystems. Weiterhin kann es sich bei einer Funkstation beispielsweise um eine Teilnehmerstation handeln.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Eine netzseitige angeordnete Funkstation, die von einer Teilnehmerstation Nutz- und/oder Signalisierungsdaten empfängt und/oder Nutz- und/oder Signalisierungsdaten an die Teilnehmerstation sendet. Bei einer netzseitig angeordneten Funkstation handelt es sich beispielsweise um eine Basisstation oder einen so genannten Zugangspunkt (access point). Eine Basisstation ist ebenso wie ein Zugangspunkt über weitere netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder paketvermittelten Verbindungen für z.B. Sprache und/oder Daten zu verstehen.

Nachfolgend wird als netzseitig angeordnete Funkstation eine Basisstation betrachtet, ohne jedoch damit zum Ausdruck bringen zu wollen, dass die Erfindung hierauf beschränkt sein soll.

Die Erfindung kann vorteilhaft in beliebigen Funkkommunikationssystemen verwendet werden. Unter Funkkommunikationssystemen sind Systeme zu verstehen, in denen eine Datenübertragung zwischen Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- oder dem UMTS-Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE 802.11a-i, HiperLAN1 und HiperLAN2 sowie Bluetooth-Netze und Breitbandnetze mit drahtlosem Zugang beispielsweise gemäß IEEE 802.16.

Im Folgenden wird die Erfindung am Beispiel von Mobilfunksystemen nach dem UMTS-Standard und nach einem WLAN-Standard beschrieben, ohne jedoch damit zum Ausdruck bringen zu wollen, dass die Erfindung hierauf beschränkt sein soll.

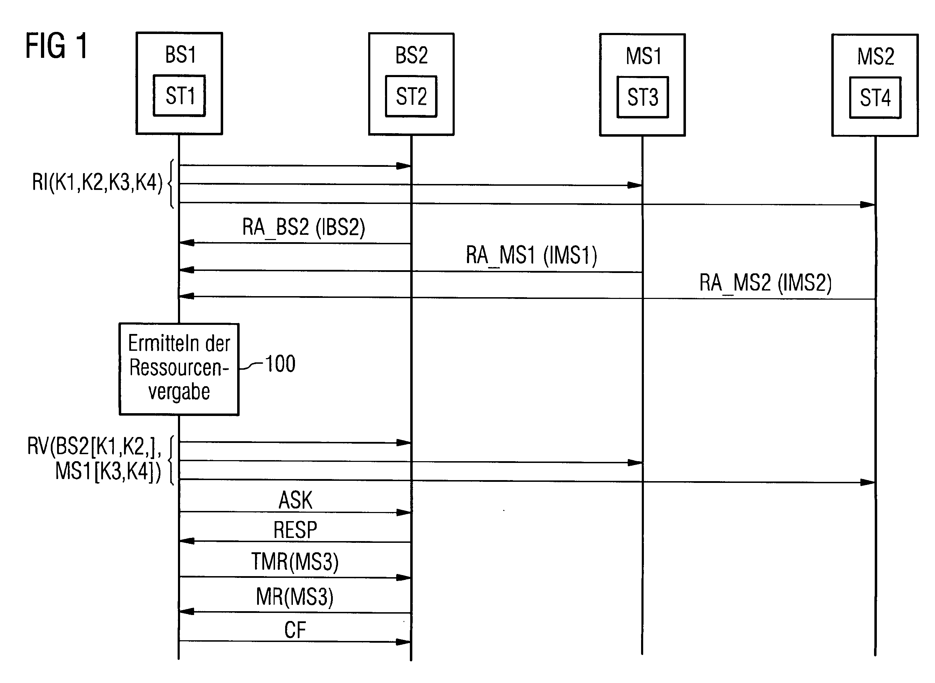

Figur 1 zeigt schematisch eine erste Basisstation BS1 mit einer ersten Signalverarbeitungseinheit ST1. Die erste Basisstation BS1 ist in einem nicht dargestellten ersten Funkkommunikationssystem angeordnet. Das erste Funkkommunikationssystem wird beispielsweise gemäß dem UMTS-Standard betrieben. In Erweiterung des UMTS-Standards verwendet das erste Funkkommunikationssystem beispielsweise alternativ oder zusätzlich zu CDMA (Code Division Multiple Access) auch OFDMA (Orthogonal Frequency Division Multiple Access) zum Unterscheiden von Übertragungskanälen und/oder von Teilnehmerstationen, d.h. von Funkverbindungen der Teilnehmerstationen. Weiterhin zeigt Figur 1 schematisch eine zweite Basisstation BS2 mit einer zweiten Signalverarbeitungseinheit ST2. Die zweite Basisstation BS2 ist in einem ebenfalls nicht dargestellten zweiten Funkkommunikationssystem angeordnet, das nach dem UMTS-Standard betrieben wird und beispielsweise ebenfalls ein Unterscheiden von Übertragungskanälen und/oder von Teilnehmerstationen mittels OFDMA ermöglicht. Zusätzlich ist die zweite Basisstation BS2 als Zugangspunkt für Funkverbindungen gemäß einem WLAN-Standard ausgebildet. Die zweite Signalverarbeitungseinheit ST2 ist entsprechend ausgebildet, um Funkübertragungen mittels OFDM (Orthogonal Frequency Division Multiplex) und/oder gemäß eines WLAN-Standards in einem für die jeweilige Übertragungstechnik einstellbaren Frequenzband durchzuführen.

Eine in Figur 1 schematisch dargestellte erste Teilnehmerstation MS1 ist dem ersten Funkkommunikationssystem der ersten Basisstation BS1 zugeordnet. Das erste Funkkommunikationssystem ist somit ein so genanntes Heimatnetz der ersten Teilnehmerstation MS1. Die erste Teilnehmerstation MS1 verfügt über eine dritte Signalverarbeitungseinheit ST3. Eine schematisch dargestellte zweite Teilnehmerstation MS2 verfügt über eine vierte Signalverarbeitungseinheit ST4. Die zweite Teilnehmerstation MS2 ist dem zweiten Funkkommunikationssystem der zweiten Basisstation BS2 zugeordnet.

Die Signalverarbeitungseinheiten ST1, ST2, ST3, ST4 steuern das Senden und Empfangen von Nutz- und/oder Signalisierungsdaten und sind auch für eine Verarbeitung empfangener und/oder zu sendender Daten verantwortlich. Die Signalverarbeitungsanlagen ST1, ST2, ST3, ST4 ermöglichen somit einen ordnungsgemäßen Ablauf und Datenübertragungen gemäß einem von der entsprechenden Funkstation verwendeten Übertragungsstandard und bestehen beispielsweise unter anderem jeweils aus einem Prozessor nebst Speichermitteln sowie einer jeweiligen Antennenvorrichtung.

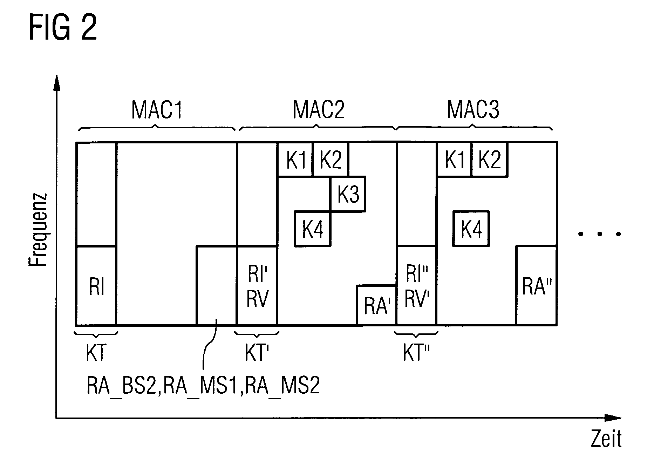

Die erste Basisstation BS1 ermittelt, dass vier Funkressourcen, d.h. vier Übertragungskanäle K1, K2, K3, K4 nicht belegt sind, und dass sie diese vier Übertragungskanäle K1, K2, K3, K4 anderen Funkstationen, d.h. anderen Basisstationen und/oder Teilnehmerstationen, zum zumindest zeitweisen Verwenden zur Verfügung stellen möchte. Die erste Basisstation BS1 sendet daher beispielsweise in einem ersten Funkübertragungsrahmen MAC1 (siehe Figur 2) auf einem Rundsendekanal (Broadcast Channel, BCCH) eine Ressourceninformation RI, der entnehmbar ist, dass vier Übertragungskanäle von anderen Funkstationen angefordert werden können. Weiterhin ist der Ressourceninformation RI entnehmbar, für wie lange, d.h. für wie viele Funkübertragungsrahmen die vier Übertragungskanäle K1, K2, K3, K4 jeweils belegt werden können. In diesem Ausführungsbeispiel gibt die Ressourceninformation RI an, dass vier Übertragungskanäle K1, K2, K3, K4 belegt werden können. Die Ressourceninformation gibt in diesem Ausführungsbeispiel nicht explizit an, welche Zeitschlitze und/oder Frequenzen und/oder Codes diesen Übertragungskanälen K1, K2, K3, K4 entsprechen. In einem alternativen Ausführungsbeispiel enthält die Ressourceninformation RI auch diese Angaben, so dass bestimmte Übertragungskanäle explizit angefordert werden können.

Der Rundsendekanal (BCCH) auf dem die erste Basisstation BS1 die Ressourceninformation RI sendet, kann von allen Funkstationen empfangen werden, die sich in Funkreichweite der ersten Basisstation BS1 befinden und ihren jeweiligen Empfänger auf die Funkparameter des Rundsendekanals eingestellt haben.

In dem Ausführungsbeispiel gemäß Figur 1 wird die Ressourceninformation RI von der zweiten Basisstation BS2, der ersten Teilnehmerstation MS1 und der zweiten Teilnehmerstation MS2 empfangen. Mittels ihrer jeweiligen Signalverarbeitungseinheiten ST2, ST3, ST4 werten die zweite Basisstation BS2, die erste Teilnehmerstation MS1 und die zweite Teilnehmerstation MS2 die Ressourceninformation RI aus und ermitteln, ob sie von der ersten Basisstation BS1 Funkressourcen, d.h. Übertragungskanäle anfordern sollen. Weiterhin wird ermittelt, wie viele Übertragungskanäle und für welchen Zeitraum diese Übertragungskanäle jeweils benötigt werden. Nach dem Ermitteln des Bedarfs an Funkressourcen sendet die zweite Basisstation BS2 eine Ressourcenanforderung RA_BS2 an die erste Basisstation BS1. In der Ressourcenanforderung RA_BS2 ist eine Information IBS2 enthalten, anhand derer die erste Basisstation BS1 entscheiden kann, ob und wie viele Übertragungskanäle sie der zweiten Basisstation BS2 nachfolgend zuweist. Die erste Teilnehmerstation MS1 und die zweite Teilnehmerstation MS2 senden ebenfalls jeweils eine Ressourcenanforderung RA_MS1 und RA_MS2 an die erste Basisstation BS1. In den Ressourcenanforderungen RA_MS1, RA_MS2 der ersten Teilnehmerstation MS1 und der zweiten Teilnehmerstation MS2 ist jeweils eine die entsprechende Teilnehmerstation MS1, MS2 betreffende Information IMS1, IMS2 enthalten, anhand derer die erste Basisstation BS1 nachfolgend entscheiden kann, ob und welche Übertragungskanäle sie der entsprechenden Teilnehmerstation MS1, MS2 zuweist.

Die Ressourcenanforderungen RA_BS2, RA_MS1, RA_MS2 werden während des ersten Funkübertragungsrahmens MAC1 an die erste Basisstation gesendet, um insbesondere eine schnelle Zuweisung der Übertragungskanäle zu ermöglichen.

Selbstverständlich können Ressourcenanforderungen auch in Funkübertragungsrahmen gesendet werden, die dem ersten Funkübertragungsrahmen MAC1 nachfolgen.

Die Ressourcenanforderungen senden die zweite Basisstation BS2, die erste Teilnehmerstation MS1 und die zweite Teilnehmerstation MS2 beispielsweise auf einem Kanal für den zufälligen Zugriff auch Funkressourcen (RACH, Random Access Channel).

Die erste Basisstation BS1 wertet die empfangenen Ressourcenanforderungen RA_BS2, RA_MS1 und RA_MS2 sowie die entsprechenden Informationen IBS2, IMS1 und IMS2 aus. In diesem Ausführungsbeispiel ist die Information IBS2 der zweiten Basisstation BS2 beispielsweise eine Kennung der zweiten Basisstation BS2 enthalten. Die Kennung dient gleichzeitig als eine Information darüber, in welchem Funkkommunikationssystem die zweite Basisstation BS2 betrieben wird. Weiterhin ist der von der zweiten Basisstation BS2 empfangenen Information IBS2 entnehmbar, dass von der zweiten Basisstation BS2 verwendete Funkressourcen des zweiten Funkkommunikationssystems zu beispielsweise 95% ausgelastet sind. Der Information IMS1 der ersten Teilnehmerstation MS1 entnimmt die erste Basisstation BS1 zusätzlich zu einer Kennung der ersten Teilnehmerstation MS1, dass die erste Teilnehmerstation MS1 innerhalb von zwei Funkübertragungsrahmen beispielsweise eine Menge von insgesamt 50 Kilobyte an Daten an das erste Funkkommunikationssystem übertragen möchte. Der Information IMS2 der zweiten Teilnehmerstation MS2 entnimmt die erste Basisstation BS1 anhand einer Kennung der zweiten Teilnehmerstation MS2, dass die zweite Teilnehmerstation MS2 zum zweiten Funkkommunikationssystem gehört. Weiterhin ist der Information IMS2 der zweiten Teilnehmerstation MS2 zu entnehmen, dass die zweite Teilnehmerstation MS2 zwei Übertragungskanäle anfordert.

Um in Kasten 100 zu ermitteln, in welcher Weise die Übertragungskanäle K1, K2, K3, K4 den anfordernden Funkstationen BS2, MS1, MS2 zugewiesen werden, erfolgt eine Priorisierung der Funkstationen. Eine Priorisierung von Funkstationen erfolgt beispielsweise derart, dass die erste Basisstation BS1 zunächst Übertragungskanäle an Teilnehmerstationen vergibt, die ihrem Funkkommunikationssystem, d.h. dem ersten Funkkommunikationssystem, zugeordnet sind. Zuerst werden daher der ersten Teilnehmerstation MS1 so viele Übertragungskanäle zugewiesen wie die erste Teilnehmerstation MS1 benötigt, um in zwei Funkübertragungsrahmen die geforderten 50 Kilobyte an Daten zu übertragen. Die erste Basisstation BS1 ermittelt, dass die geforderte Datenmenge - beispielsweise bei gleichzeitiger Berücksichtigung der Ressourcenanforderungen RA_BS2, RA_MS2 der zweiten Basisstation BS2 und der zweiten Teilnehmerstation MS2 - übertragen werden kann, wenn der ersten Teilnehmerstation MS1 zwei Übertragungskanäle K3, K4 in einem zweiten Funkübertragungsrahmen MAC2 und ein weiterer Übertragungskanal K4 in einem dritten Funkübertragungsrahmen MAC3 zugewiesen wird. Somit werden während eines Funkübertragungsrahmens maximal zwei der vier Übertragungskanäle benötigt. Die erste Basisstation BS1 kann somit noch zwei Übertragungskanäle im zweiten Funkübertragungsrahmen MAC2 und drei Übertragungskanäle im dritten Funkübertragungsrahmen MAC3 vergeben. Siehe dazu auch die in Figur 2 dargestellten Funkübertragungsrahmen mit der jeweiligen Belegung von Übertragungskanälen.

Im Rahmen der Priorisierung von Funkstationen berücksichtigt die ersten Basisstation BS1 als nächstes Basisstationen fremder Funkkommunikationssysteme. Berücksichtigt werden von diesen Basisstation beispielsweise nur diejenigen, deren Auslastungsgrad eigener Funkressourcen einen vorbestimmten Grenzwert von beispielsweise 90% übersteigt. Erst wenn danach noch Übertragungskanäle zuweisbar sind, werden diese Übertragungskanäle Teilnehmerstationen zugewiesen, die zu fremden Funkkommunikationssystemen gehören. Da der Auslastungsgrad der zweiten Basisstation BS2 90% übersteigt, wird die entsprechende Ressourcenanforderung RA_BS2 als nächstes berücksichtigt und der zweiten Basisstation BS2 werden in dem zweiten und dritten Funkübertragungsrahmen MAC2, MAC3 jeweils zwei Übertragungskanäle K1, K2 zugewiesen. In dem zweiten Übertragungsrahmen MAC2 sind somit alle vier Übertragungskanäle K1, K2, K3, K4 belegt und eine Zuweisung eines Übertragungskanals an die zweite Teilnehmerstation MS2 ist somit im zweiten Funkübertragungsrahmen technisch nicht möglich. Im dritten Funkübertragungsrahmen MAC3 wäre zwar ein Übertragungskanal K3 verfügbar, aber die erste Basisstation BS1 entscheidet, dass sie diesen Übertragungskanal K3 nicht an eine fremde Teilnehmerstation vergeben möchte. Da keine Ressourcenanforderung durch eigene Teilnehmerstationen, eigene Basisstationen oder durch Basisstationen fremder Funkkommunikationssysteme vorliegt, bleibt dieser Übertragungskanal K3 im dritten Funkübertragungsrahmen MAC3 unbelegt.

Die von der ersten Basisstation BS1 festgelegte Ressourcenvergabe wird von der ersten Basisstation BS1 beispielsweise auf dem Rundsendesignal durch eine entsprechende Nachricht RV über eine Ressourcenvergabe zu Beginn des zweiten Funkübertragungsrahmens MAC2 gesendet. Die Nachricht RV enthält die Angabe, dass der zweiten Basisstation BS2 ein erster und ein zweiter Übertragungskanal K1, K2 für den oben angegebenen Zeitraum zugewiesen wird und dass ein dritter Übertragungskanal K3 und ein vierter Übertragungskanal K4 der ersten Teilnehmerstation MS1 für den oben angegebenen Zeitraum zugewiesen werden. Die zweite Basisstation BS2 und die erste Teilnehmerstation MS1 sowie die zweite Teilnehmerstation MS2 empfangen regelmäßig den Rundsendekanal und daher auch die Nachricht RV. Sie entnehmen der Nachricht RV die ihnen zugewiesenen Übertragungskanäle und führen nachfolgend auf den zugewiesenen Übertragungskanälen Datenübertragungen durch. Dabei führt die erste Teilnehmerstation MS1 die Datenübertragungen auf den zugewiesenen Übertragungskanälen K3, K4 mit der ersten Basisstation BS1 durch. Die zweite Basisstation BS2 verwendet die ihr zugewiesenen Übertragungskanäle K1, K2 in dem zweiten Funkübertragungsrahmen MAC2 und dem dritten Funkübertragungsrahmen MAC2 für Datenübertragungen mit Teilnehmerstationen des zweiten Funkkommunikationssystems. Es bleibt dabei der zweiten Basisstation BS2 überlassen, welche der von ihr unterstützten Funkzugangstechnologie sie verwendet; d.h. die zweite Basisstation BS2 entscheidet, ob sie auf den ihr zugewiesenen Übertragungskanälen K1, K2 gemäß dem UMTS-Standard oder gemäß dem WLAN-Standard überträgt. Die zweite Teilnehmerstation MS2 entnimmt der Nachricht RV, dass ihr keine Übertragungskanäle zugewiesen wurden, d.h., dass die zweite Teilnehmerstation MS2 das erste Funkkommunikationssystem zumindest zu diesem Zeitpunkt nicht nutzen kann.

Die erste Basisstation BS1 unterhält Verbindungen zu eigenen Teilnehmerstationen, die in der Figur nicht dargestellt sind. Einige dieser Verbindungen haben eine Übertragungsqualität, die einen im ersten Funkkommunikationssystem vorgebbaren Grenzwert unterschreitet. Für einige dieser Teilnehmerstationen könnte daher eine Verbindung zu der zweiten Basisstation BS2 eine bessere Übertragungsqualität liefern, beispielsweise deshalb, weil die zweite Basisstation BS2 näher an den entsprechenden Teilnehmerstationen gelegen ist. Aus diesem Grund sendet die erste Basisstation BS1 eine Anfrage ASK an die zweite Basisstation BS2, beispielsweise über den Rundsendekanal, und fragt an, ob die zweite Basisstation BS2 bereit wäre, Teilnehmerstationen des ersten Funkkommunikationssystems über ihr vom ersten Funkkommunikationssystem, d.h. von der ersten Basisstation BS1, zugewiesenen Funkressourcen zu versorgen. Die zweite Basisstation BS2 sendet eine Antwort RESP, mit der sie ihre Bereitschaft signalisiert, Teilnehmerstationen des ersten Funkkommunikationssystems gemäß der Anfrage ASK zu versorgen. Um zu Ermitteln, für welche Teilnehmerstationen eine Versorgung durch die zweite Basisstation BS2 in Frage kommt, sendet die erste Basisstation BS1 eine Teilnehmerstationsinformation TMR an die zweite Basisstation BS2, der entnehmbar ist, für welche Teilnehmerstationen die zweite Basisstation BS2 einen Messreport MR anfertigen soll. Der Messreport MR gibt beispielsweise ein Maß für eine Empfangsqualität, z.B. eine Empfangsleistung oder ein Signal-zu-Rauschen Verhältnis, für Signale an, die die zweite Basisstation BS2 nachfolgend von den entsprechenden Teilnehmerstationen empfängt.

In dem Ausführungsbeispiel aus Figur 1 ist der Teilnehmerstationsinformation TMR eine einzige, nicht dargestellte dritte Teilnehmerstation MS3 des ersten Funkkommunikationssystems entnehmbar. Die zweite Basisstation BS2 misst nachfolgend ein Maß für eine Empfangsqualität für Signale, die sie von der dritten Teilnehmerstation MS3 empfängt. Beispielsweise erhält die zweite Basisstation BS2 zusammen mit der Teilnehmerstationsinformation TM3 entsprechende Parameter, die sie benötigt, um Signale zu empfangen, die die dritte Teilnehmerstation MS3 an die erste Basisstation BS1 im ersten Funkkommunikationssystem auf ihr zu diesem Zeitpunkt zugewiesenen Übertragungskanälen sendet. Den Messreport MR sendet die zweite Basisstation BS2 an die erste Basisstation BS1. Die erste Basisstation BS1 stellt fest, dass die zweite Basisstation BS2 Signale der dritten Teilnehmerstation MS3 mit einer Empfangsqualität empfangen kann, die über einem im ersten Funkkommunikationssystem festlegbaren Grenzwert liegt. Daher entscheidet die erste Basisstation BS1, dass die zweite Basisstation BS2 den ersten Übertragungskanal K1 und den zweiten Übertragungskanal K2 zum Durchzuführen einer Datenübertragung mit der dritten Teilnehmerstation MS3 in Funkübertragungsrahmen verwenden soll, die dem dritten Funkübertragungsrahmen MAC3 folgen.

Um die Datenübertragung stellvertretend für die erste Basisstation BS1 selbstständig durchführen zu können, werden der zweiten Basisstation BS2 durch eine entsprechende Nachricht CF Kontrollfunktionen übertragen, die üblicherweise von der ersten Basisstation BS1 im ersten Funkkommunikationssystem durchgeführt werden. Die zweite Basisstation BS2 führt die physikalische Datenübertragung somit nachfolgend auf der physikalischen Schicht (physical layer, Layer 1) und eine Steuerung der Datenübertragungen auf der Sicherungsschicht (Data Link Layer, Layer 2) durch. Da die erste Basisstation BS1 und die zweite Basisstation BS2 nicht über das gleiche Kernnetz versorgt werden, sind für die Datenübertragung erforderliche Funktionen höherer Schichten (beispielsweise der Vermittlungsschicht [network layer, Layer 3] oder der Transportschicht [transport layer, Layer 4]) weiterhin im ersten Funkkommunikationssystem angeordnet. Die zweite Basisstation BS2 dient somit als Relaisstation für die Datenübertragung der dritten Teilnehmerstation MS3 im ersten Funkkommunikationssystem. Dies bedeutet, dass die zweite Basisstation BS2 für die dritte Teilnehmerstation MS3 bestimmte Daten vom ersten Funkkommunikationssystem empfängt und an die dritte Teilnehmerstation weiterleitet. Weiterhin empfängt die zweite Basisstation BS2 von der dritten Teilnehmerstation MS3 für das erste Funkkommunikationssystem bestimmte Daten und leitet diese Daten an das erste Funkkommunikationssystem weiter. Für das Weiterleiten von Daten zwischen dem ersten und dem zweiten Funkkommunikationssystem werden entsprechende Verbindungen zwischen den Kernnetzen des ersten und des zweiten Funkkommunikationssystems verwendet.

In einem alternativen Ausführungsbeispiel haben das erste und das zweite Funkkommunikationssystem beispielsweise denselben Betreiber und verwenden beispielsweise dasselbe Kernnetz. In diesem Fall kann die erste Basisstation BS1 auch Funktionen auf der Vermittlungsschicht und/oder der Transportschicht an die zweite Basisstation BS2 übertragen.

Alternativ oder zusätzlich zu den genannten Angaben, die in den mit der jeweiligen Ressourcenanforderung RA_BS2, RA_MS1, RA_MS2 von der zweiten Basisstation BS2, der ersten Teilnehmerstation MS1 und der zweiten Teilnehmerstation MS2 gesendeten Informationen IBS2, IMS1, IMS2 enthalten sind, können die Informationen IBS2, IMS1, IMS2 auch jeweils ein Preisangebot für die angeforderten Übertragungskanäle enthalten. Die erste Basisstation BS1 führt in diesem Fall beispielsweise eine verdeckte Auktion für die von ihr angebotenen Übertragungskanäle K1, K2, K3, K4 durch. Beispielsweise werden den anfordernden Funkstationen nur dann Übertragungskanäle zugewiesen, wenn das jeweilige Preisangebot einen beispielsweise in der Ressourceninformation enthaltenen Mindestpreis überschreitet. Weiterhin erhält zunächst diejenige Funkstation, die von ihr angeforderten Übertragungskanäle, die den höchsten Preis dafür bietet. Sollten danach noch Übertragungskanäle vergebbar sein, werden diese Übertragungskanäle gemäß den entsprechenden Preisangeboten auf die anfordernden Funkstationen verteilt.

Ein von einer Funkstation für Funkressourcen gebotener Preis wird nach erfolgter Ressourcenvergabe beispielsweise gemeinsam mit einer die Funkstation identifizierenden Kennung in der ersten Basisstation gespeichert und wird beispielsweise erst beim Erreichen einer vorgegebenen Summe gespeicherter Preise der Funkstation oder aller Funkstationen und/oder nach Ablauf eines vorgegebenen Zeitintervalls und/oder nach Erreichen einer vorgegebenen Anzahl von für die Funkstation oder für alle Funkstationen gespeicherten Preisen an eine beispielsweise im Kernnetz des ersten Funkkommunikationssystems angeordnete, eine Vergebührung durchführende Vergebührungseinheit weitergeleitet. Alternativ kann nach jeder erfolgten Ressourcenvergabe der von einer Funkstation für die Funkressourcen gebotene Preis an die Vergebührungseinheit weitergeleitet werden, ohne weitere Ressourcenvergaben für die Funkstation abzuwarten.

Um das Interesse der zweiten Basisstation BS2 an der Übernahme von Datenübertragungen von Teilnehmerstationen des ersten Funkkommunikationssystems zu erhöhen, ist es günstig, wenn die zweite Basisstation BS2 im Gegenzug beispielsweise die Übertragungskanäle K1, K2 in dem zweiten Funkübertragungsrahmen MAC2 und in dem dritten Funkübertragungsrahmen MAC3 kostenlos oder vergünstigt erhält. Alternativ oder zusätzlich kann der zweiten Basisstation BS2 aufgrund der Übernahme von Datenübertragungen von Teilnehmerstationen des ersten Funkkommunikationssystems eine bevorzugte Behandlung bei nachfolgenden Ressourcenanforderungen von der ersten Basisstation BS1 bzw. vom ersten Funkkommunikationssystem angeboten werden.

Figur 2 zeigt schematisch eine Darstellung von MAC-Rahmen, d.h. von Funkübertragungsrahmen in der MAC-Schicht (MAC: Medium Access Control). Dabei ist auf der Abszisse die Zeit und auf der Ordinate die Frequenz aufgetragen.

Ein Mac-Rahmen weist einen Kopfteil (header) auf, in dem Kontroll- und/oder Steuerinformationen angegeben werden, anhand derer eine den Kopfteil verarbeitende Funkstation beispielsweise erkennen kann, wann und wie sie auf Übertragungskanäle zugreifen kann. Beispielsweise sind Informationen vorhanden, zu welchem Zeitpunkt und mit welcher Frequenz und/oder welchem Code die Funkstation nachfolgend in einem dem Kopfteil folgenden Bereich des MAC-Rahmens Nutzdaten und/oder Signalisierungsdaten übertragen und/oder empfangen kann.

In dem Kopfteil KT des ersten Funkübertragungsrahmen MAC1 sendet die erste Basisstation BS1 wie anhand von Figur 1 beschrieben die Ressourceninformation RI auf dem Rundsendekanal. Ebenfalls im ersten Funkübertragungsrahmen MAC1 antworten die zweite Basisstation BS2, die erste Teilnehmerstation MS1 und die zweite Teilnehmerstation MS2 auf die Ressourceninformation RI durch die jeweiligen Ressourcenanforderungen RA_BS2, RA_MS1 und RA_MS2. In dem auf den ersten Funkübertragungsrahmen MAC1 folgenden zweiten Funkübertragungsrahmen MAC2 und in dem auf den zweiten Funkübertragungsrahmen MAC2 folgenden dritten Funkübertragungsrahmen MAC3 belegen die zweite Basisstation BS2 und die erste Teilnehmerstation MS1 wie zuvor anhand von Figur 1 beschrieben, die Übertragungskanäle K1, K2, K3, K4 nach dem sie zuvor im Kopfteil KT' des zweiten Funkübertragungsrahmens MAC2 auf dem Rundsendekanal die Nachricht RV über eine Ressourcenvergabe von der ersten Basisstation BS1 empfangen haben.

Im Kopfteil KT' des zweiten Funkübertragungsrahmen MAC2 und im Kopfteil KT'' des dritten Funkübertragungsrahmen MAC3 sind jeweils weitere Ressourceninformationen RI', RI" sowie weitere Ressourcenanforderungen RA' und RA'' sowie eine weitere Nachricht RV' über eine Ressourcenvergabe dargestellt. Diese Nachrichten dienen dazu, dass die erste Basisstation BS1 selbstverständlich zusätzlich zu der Vergabe von Übertragungskanälen gemäß Figur 1 auch weitere Übertragungskanäle durch eine entsprechende Signalisierung vergeben kann.

Die drei Punkte, die dem dritten Funkübertragungsrahmen MAC3 folgen, geben an, dass dem dritten Funkübertragungsrahmen MAC3 selbstverständlich weitere Funkübertragungsrahmen folgen, in denen ebenfalls anforderbare Übertragungskanäle von der ersten Basisstation BS1 an Funkstationen vergeben werden können.

Selbstverständlich kann das anhand von Figur 1 beschriebene Zuweisen von Übertragungskanälen, die von der ersten Basisstation BS1 zumindest zeitweise nicht verwendet werden bzw. zur Belegung durch andere Funkstationen freigegeben werden, auch dazu verwendet werden, Übertragungskanäle von der ersten Basisstation BS1 an eine andere Basisstation zuzuweisen, die dem ersten Funkkommunikationssystem zugeordnet ist.

Dadurch, dass Ressourceninformationen erfindungsgemäß über die Luftschnittstelle gesendet werden und dass auch Ressourcenanforderungen sowie Nachrichten über Ressourcenvergaben vorzugsweise durch eine Signalisierung über die Luftschnittstelle erfolgen, ermöglicht die Erfindung eine schnelle und flexible Vergabe von Funkressourcen, die durch eine Funkstation, beispielsweise eine Basisstation, verwaltet werden. Alternativ zum Übertragen über die Luftschnittstelle kann eine Ressourcenanforderung einer netzseitig angeordneten Funkstation und/oder eine Nachricht über eine Ressourcenvergabe an eine netzseitig angeordnete Funkstation auch über Datenleitungen übertragen werden.

Während in dem Ausführungsbeispiel gemäß Figur 1 die zweite Basisstation BS2 selbst entscheidet, welche Funkzugangstechnologie sie in dem zweiten und dritten Funkübertragungsrahmen MAC2, MAC3 für Datenübertragungen auf dem ersten und zweiten Übertragungskanal K1, K2 verwendet, kann der zweiten Basisstation BS2 selbstverständlich auch das Verwenden einer bestimmten Funktechnologie von der ersten Basisstation BS1 vorgeschrieben werden. Die erste Basisstation BS1 entscheidet somit flexibel welche Funkzugangstechnologien sie durch das Zuweisen entsprechender Übertragungskanäle den anfordernden Funkstationen zuweist. Sie führt somit ein so genanntes Joint Radio Ressource Management (JRRM) durch.

Gemäß dem Ausführungsbeispiel von Figur 1 wurde das Ermitteln freier Funkressourcen sowie die Ressourcenvergabe durch eine in der ersten Basisstation BS1 angeordnete Einheit, beispielsweise die Signalverarbeitungseinheit ST1, durchgeführt. Alternativ oder zusätzlich kann das Ermitteln der Ressourceninformation bzw. das Ermitteln und/oder Erstellen der Nachricht RV über die Ressourcenvergabe in einer anderen Einrichtung des Funkzugangsnetzes des ersten Funkkommunikationssystems, beispielsweise in einer Funksteuereinheit (Radio Network Controller, RNC) oder in einer übergeordneten, in einem Kernnetz des ersten Funkkommunikationssystems angeordneten Einheit erfolgen.

## Patentansprüche

1. Verfahren zum Betrieb eines ersten Funkkommunikationssystems,
bei dem
- eine netzseitig angeordnete erste Funkstation (BS1) des ersten Funkkommunikationssystems eine Ressourceninformation (RI) über eine Luftschnittstelle sendet, wobei der Ressourceninformation (RI) entnehmbar ist, dass wenigstens eine von dem ersten Funkkommunikationssystem verwaltete Funkressource (K1, K2, K3, K4) zum zumindest zeitweise Verwenden durch andere Funkstationen angefordert werden kann,
- die erste Funkstation (BS1) von wenigstens einer netzseitig angeordneten zweiten Funkstation (BS2) eine Ressourcenanforderung (RA_BS2) empfängt,
- und die erste Funkstation (BS1) weiterhin von der zweiten Funkstation (BS2) eine Information (IBS2) empfängt, anhand derer netzseitig entschieden wird, ob der zweiten Funkstation (BS2) Funkressourcen zugewiesen werden.

2. Verfahren nach Anspruch 1,
**dadurch gekennzeichnet,**
- **dass** die erste Funkstation (BS1) von wenigstens einer dritten Funkstation (MS1, MS2) eine Ressourcenanforderung (RA_MS1, RA_MS2) empfängt,
- **dass** die erste Funkstation (BS1) auch von der dritten Funkstation (MS1, MS2) eine Information (IMS1, IMS2) empfängt, anhand derer netzseitig entschieden wird, ob der dritten Funkstation (MS1, MS2) alternativ oder zusätzlich zur zweiten Funkstation (BS2) Funkressourcen zugewiesen werden.

3. Verfahren nach Anspruch 2,
**dadurch gekennzeichnet,**
**dass** die dritte Funkstation (MS1, MS2) eine Teilnehmerstation eines Funkkommunikationssystems ist.

4. Verfahren nach einem der vorstehenden Ansprüche,
**dadurch gekennzeichnet,**
**dass** die zweite Funkstation (BS2) und/oder die dritte Funkstation (MS2) in einem zweiten Funkkommunikationssystem angeordnet sind, wobei das zweite Funkkommunikationssystem und das erste Funkkommunikationssystem durch unterschiedliche Betreiber und/oder mit unterschiedlichen Funkzugangstechnologien betrieben werden.

5. Verfahren nach einem der vorstehenden Ansprüche,
**dadurch gekennzeichnet,**
**dass** anhand der von der zweiten Funkstation (BS2) und/oder dritten Funkstation (MS1, MS2) jeweils empfangenen Information (IBS2, IMS1, IMS2) zusätzlich festgelegt wird, welche und wie viele Funkressourcen der zweiten Funkstation (BS2) und/oder dritten Funkstation (MS1, MS2) zugewiesen werden.

6. Verfahren nach einem der vorstehenden Ansprüche,
**dadurch gekennzeichnet,**
**dass** der zweiten und/oder der dritten Funkstation (BS2) Kontrollfunktionen zur Steuerung von Funkverbindungen über zumindest einige der zugewiesenen Funkressourcen mit Teilnehmerstationen (MS3) des ersten Funkkommunikationssystems zugewiesen werden.

7. Verfahren nach einem der vorstehenden Ansprüche,
**dadurch gekennzeichnet,**
**dass** als Funkressourcen Zeitschlitze und/oder Frequenzen und/oder Codes verwendet werden.

8. Verfahren nach einem der vorstehenden Ansprüche,
**dadurch gekennzeichnet,**
**dass** der Ressourceninformation (RI) entnehmbar ist, wie viele und/oder welche Funkressourcen (K1, K2, K3, K4) angefordert werden können.

9. Verfahren nach einem der vorstehenden Ansprüche,
**dadurch gekennzeichnet,**
**dass** die Ressourceninformation (RI) nur an eine vorgebbare Gruppe von Funkstationen gesendet wird und nur Anforderungen von Funkressourcen von Funkstationen der Gruppe bearbeitet werden.

10. Verfahren nach einem der vorstehenden Ansprüche,
**dadurch gekennzeichnet,**
**dass** die Ressourceninformation (RI) und/oder die Ressourcenanforderungen (RA_BS2, RA_MS1, RA_MS2) und/oder eine Nachricht (RV) über eine Ressourcenvergabe in der Medium Access Control Schicht MAC von Funkübertragungsrahmen (MAC1) gesendet werden.

11. Verfahren zum Betrieb eines zweiten Funkkommunikationssystems,
bei dem
- eine netzseitig angeordnete zweite Funkstation (BS2) des zweiten Funkkommunikationssystems eine Ressourceninformation (RI) über eine Luftschnittstelle von einer netzseitig angeordneten ersten Funkstation (BS1) eines ersten Funkkommunikationssystems empfängt, wobei der Ressourceninformation (RI) entnehmbar ist, dass wenigstens eine von dem ersten Funkkommunikationssystem verwaltete Funkressource (K1, K2, K3, K4) zum zumindest zeitweise Verwenden durch andere Funkstationen angefordert werden kann,
- die zweite Funkstation (BS2) eine Ressourcenanforderung (RA_BS2) an die ersten Funkstation (BS1) sendet,
- und die zweite Funkstation (BS2) weiterhin eine Information (IBS2) an die erste Funkstation (BS1) sendet, damit anhand der Information (IBS2) vom ersten Funkkommunikationssystem entschieden werden kann, ob der zweiten Funkstation (BS2) Funkressourcen zugewiesen werden.

12. Netzseitig angeordnete erste Funkstation (BS1) eines ersten Funkkommunikationssystems
- Mit Mitteln (ST1) zum Erzeugen und Senden einer Ressourceninformation (RI) über eine Luftschnittstelle, wobei der Ressourceninformation (RI) entnehmbar ist, dass wenigstens eine von dem ersten Funkkommunikationssystem verwaltete Funkressource (K1, K2, K3, K4) zum zumindest zeitweise Verwenden durch andere Funkstationen angefordert werden kann,
- Mit Mitteln (ST1) zum Empfangen und Verarbeiten einer Ressourcenanforderung (RA_BS2) von wenigstens einer netzseitig angeordneten zweiten Funkstation (BS2),
- und mit Mitteln (ST1) zum Empfangen und Verarbeiten einer Information (IBS2) von der zweiten Funkstation (BS2), anhand derer netzseitig entschieden wird, ob der zweiten Funkstation (BS2) Funkressourcen zugewiesen werden.

13. Netzseitig angeordnete zweite Funkstation (BS2) eines zweiten Funkkommunikationssystems
- Mit Mitteln (ST2) zum Empfangen und Verarbeiten einer Ressourceninformation (RI) über eine Luftschnittstelle von einer netzseitig angeordneten ersten Funkstation (BS1) eines ersten Funkkommunikationssystem, wobei der Ressourceninformation (RI) entnehmbar ist, dass wenigstens eine von dem ersten Funkkommunikationssystem verwaltete Funkressource (K1, K2, K3, K4) zum zumindest zeitweise Verwenden durch andere Funkstationen angefordert werden kann,
- Mit Mitteln (ST2) zum Erzeugen und Senden einer Ressourcenanforderung (RA_BS2) an die ersten Funkstation (BS1),
- und mit Mitteln (ST2) zum Erzeugen und Senden einer Information (IBS2) an die erste Funkstation (BS1), damit anhand der Information (IBS2) vom ersten Funkkommunikationssystem entschieden werden kann, ob der zweiten Funkstation (BS2) Funkressourcen zugewiesen werden.
